# EUROPÄISCHE PATENTSCHRIFT

(11) **EP 2 274 825 B1**
(45) Veröffentlichungstag und Bekanntmachung des Hinweises auf die Patenterteilung: **10.08.2016**
(21) Anmeldenummer: 09741948.5
(22) Anmeldetag: 27.03.2009
(51) Int. Cl.: H02M 7/483

(54) **STROMVERSORGUNGSEINRICHTUNG**
POWER SUPPLY DEVICE
SYSTEME D'ALIMENTATION ELECTRIQUE

(30) Priorität: 07.05.2008 DE 102008022618
(43) Veröffentlichungstag der Anmeldung: 19.01.2011
(73) Patentinhaber: Siemens Aktiengesellschaft, 80333 München (DE)
(72) Erfinder: BLÖCHER, Bernd, 91054 Erlangen (DE); HILLER, Marc, 91207 Lauf (DE); SOMMER, Rainer, 91336 Heroldsbach (DE)
(86) Internationale Anmeldenummer: PCT/EP2009/053654
(87) Internationale Veröffentlichungsnummer: WO 2009/135730

(56) Entgegenhaltungen:
- EP-A- 1 385 259
- WO-A-2007/028349
- LAMELL J O ET AL: "Offshore Platform Powered with New Electrical Motor Drive System" PETROLEUM AND CHEMICAL INDUSTRY CONFERENCE, 2005. INDUSTRY APPLICATION S SOCIETY 52ND ANNUAL DENVER, CO, USA 12-14 SEPT. 2005, NEW YORK,IEEE, US, 12. September 2005 (2005-09-12), Seiten 259-266, XP010846505 ISBN: 978-0-7803-9272-4

## Beschreibung

Die Erfindung bezieht sich auf eine Stromversorgungseinrichtung gemäß Oberbegriff des Anspruchs 1.

Mittels einer derartigen Stromversorgungseinrichtung werden drehzahlveränderbare Antriebe, bestehend aus einem elektrischen Motor und einer Pumpe oder einem Kompressor, am Meeresgrund mit Energie aus einem elektrischen Versorgungsnetz an Land versorgt. Der Abstand zwischen Einspeisung an Land und Antrieb am Meeresgrund kann mehrere hundert Kilometer bei Meerestiefen von mehreren Kilometern betragen.

Drehzahlveränderbare Antriebe für Unterwasser-Anwendungen, auch als Subsea-Anwendungen bezeichnet, werden beispielsweise bei Öl- und Gasförderung auf dem Meeresboden verwendet. Diese drehzahlveränderbaren Antriebe werden bekannterweise mittels eines Spannungszwischenkreis-Umrichters aus einem elektrischen Versorgungsnetz mit Energie versorgt.

Für die Realisierung von Mittelspannungs-Umrichtern sind der Veröffentlichung mit dem Titel "Stromrichterschaltungen für Mittelspannung und deren Leistungshalbleiter für den Einsatz in Industriestromrichtern" von Max Beuermann, Marc Hiller und Dr. Rainer Sommer, abgedruckt im Tagungsband der ETG-Tagung "Bauelemente der Leistungselektronik und ihre Anwendung", Bad Nauheim, 2006, mehrere Umrichter-Topologien entnehmbar. Zu diesen Umrichter-Topologien gehören die Umrichter 3-Level Neutral-Point-Clamped (3L-NPC) mit 12-pulsiger Diodeneinspeisung, 4-Level Flying Capacitor (4L-FC) mit 12-pulsiger Diodeneinspeisung, Series-Connected H-Bridge Zellenumrichter mit 2-Level H-Brücken pro Zelle (SC-HB(2L)) und ein Series-Connected H-Bridge Zellenumrichter mit 3-Level H-Brücke pro Zelle (SC-HB (3L) ).

Aus der Veröffentlichung "Modulares Stromrichterkonzept für Netzkupplungsanwendung bei hohen Spannungen", von Rainer Marquardt, Anton Lesnicar und Jürgen Hildinger, abgedruckt im Tagungsband der ETG-Tagung 2002, ist ein Umrichter mit einem netz- und lastseitigen Stromrichter, die gleichspannungsseitig miteinander elektrisch leitend verbunden sind, bekannt, wobei als Stromrichter jeweils ein modularer Mehrpunkt-Stromrichter, auch als modularer Multilevel Konverter (M2C) bezeichnet, verwendet wird. Ein derartiger Spannungszwischenkreis-Umrichter mit einem netz- und lastseitigen Stromrichter in M2C-Topologie weist gegenüber den bereits beschriebenen Spannungszwischenkreis-Umrichtern keinen aus Zwischenkreiskondensatoren aufgebauten Spannungszwischenkreis mehr auf. Jeder Ventilzweig eines jeden Phasenmoduls des Umrichters in M2C-Topologie weist wenigstens ein zweipoliges Subsystem auf. Durch die Anzahl der verwendeten Subsysteme eines jeden Ventilzweigs wird die Stufigkeit einer Phasen-Ausgangsspannung bestimmt.

Aufgabe einer Stromversorgungseinrichtung für Subsea-Anwendungen ist es, einen auf dem Meeresgrund befindlichen Motor eines drehzahlveränderbaren Antriebs mit einem in Spannung und Frequenz veränderbaren Drehspannungssystem zu versorgen. Dabei gibt es verschiedene prinzipielle Ausführungsformen:

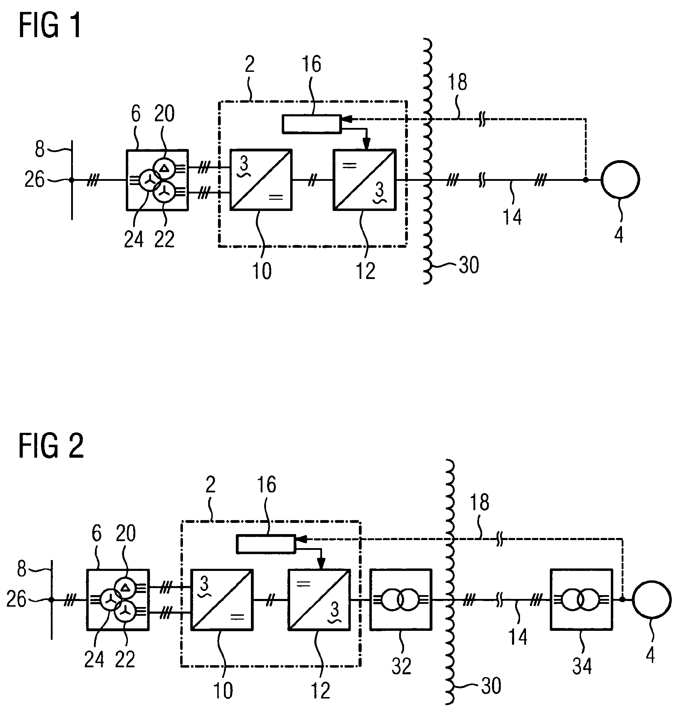

In der Figur 1 ist eine erste bekannte Variante einer Stromversorgungseinrichtung für Subsea-Anwendungen schematisch veranschaulicht. In dieser Figur 1 sind mit 2 ein Spannungszwischenkreis-Umrichter, mit 4 ein elektrischer Motor eines Antriebs, mit 6 ein Stromrichtertransformator und mit 8 ein speisendes Versorgungsnetz bezeichnet. Der Spannungszwischenkreis-Umrichter 2 weist einen netz- und lastseitigen Stromrichter 10 und 12 auf, die gleichspannungsseitig mittels eines Gleichspannungs-Zwischenkreises, der aus Übersichtlichkeitsgründen nicht explizit dargestellt ist, elektrisch miteinander verbunden sind. Der lastseitige Stromrichter, der vorzugsweise ein selbstgeführter Pulsstromrichter ist, ist mittels eines dreiphasigen Wechselstromkabels 14 mit dem Motor 4 verknüpft. Außerdem weist dieser Umrichter 2 eine Signalelektronik 16 auf, die eingangsseitig mittels einer Datenleitung 18 mit Anschlüssen des elektrischen Motors 4 verbunden sein kann, deshalb ist dieses Datenkabel 18 mittels einer unterbrochenen Linie dargestellt, und ausgangsseitig mit Steueranschlüssen des selbstgeführten Pulsstromrichters 12 verbunden. Als Stromrichtertransformator 6 ist ein Transformator mit zwei Sekundärwicklungen 20 und 22 vorgesehen, von denen die Sekundärwicklung 20 in Dreieck und die Sekundärwicklung 22 in Stern geschaltet sind. Da die Primärwicklung 24 ebenfalls in Stern geschaltet ist, weist nur die Sekundärwicklung 20 zur Primärwicklung 24 einen Verschiebungswinkel von 30° el. auf. Die Primärwicklung 24 ist mit dem speisenden Netz 8, insbesondere mit einem Einpeisepunkt 26, elektrisch leitend verbunden. Als netzseitiger Stromrichter 10 ist eine Diodeneinspeisung vorgesehen, die 12-pulsig ausgeführt ist. Das heißt, diese Diodeneinspeisung 10 weist zwei dreiphasige Diodenbrücken auf, die gleichspannungsseitig elektrisch in Reihe geschaltet sind. Durch die 12-pulsige Ausführungsform der Diodeneinspeisung 10 sind die Stromüberschwingungen im speisenden Netz 8 gering. Diese Stromversorgungseinrichtung für Subsea-Anwendungen ist an Land bzw. auf einer Plattform auf dem Meer angeordnet. Der Übergang von Land bzw. Plattform zum Meer ist durch die Wellenlinien 30 angedeutet. Somit befindet sich nur der Antrieb, bestehend aus dem Motor 4 und einer Pumpe bzw. einem Kompressor, auf dem Meeresboden. Vom Antrieb ist nur der Motor 4 näher dargestellt.

Da die kapazitive Ladeleistung des Wechselstromkabels 14 einen hohen Blindleistungsbedarf an den Spannungszwischenkreis-Umrichter 2 stellt, kann zwischen Umrichter 2 und Motor 4 nur eine begrenzte Distanz vorgesehen sein. Außerdem ist mit dieser Stromversorgungseinrichtung kein Mehrmotorenantrieb möglich. Jeder Motor 4 eines Antriebs muss mittels eines eigenen Wechselstromkabels 14 mit dem Spannungszwischenkreis-Umrichter 2 verbunden werden.

In der Figur 2 ist eine weitere bekannte Stromversorgungseinrichtung eines am Meeresgrund angeordneten drehzahlveränderbaren Antriebs dargestellt. Diese Ausführungsform unterscheidet sich von der Ausführungsform gemäß Figur 1 dadurch, dass das Wechselstromkabel 14 mittels eines Transformators 32 mit Ausgängen des selbstgeführten Pulsstromrichters 12 des Spannungszwischenkreis-Umrichters 2 verknüpft ist. Außerdem ist dieses Wechselstromkabel 14 mittels eines zweiten Transformators 34 mit Anschlüssen des auf Meeresgrund angeordneten elektrischen Motors 14 verbunden. Mit dem Transformator 32 wird eine generierte Umrichterspannung auf ein Potential höher als das Potential der Nennspannung des elektrischen Motors 4 transformiert. Nach der Übertragung wird dieses Potential wieder auf Nennpotential des Motors transformiert. Durch die erhöhte Übertragungsspannung entstehen geringere ohmsche Leistungsverluste. Außerdem kann das Wechselstromkabel 14 einen kleineren Kabelquerschnitt aufweisen, wodurch eine günstigere Auslegung des Kabels 14 ermöglicht wird. Dadurch kann eine größere Distanz zwischen Umrichter 2 und Motor 4 gegenüber der Ausführungsform gemäß Figur 1 überbrückt werden. Diese Vorteile werden damit erkauft, dass zwei Transformatoren 32 und 34 benötigt werden, wobei der Transformator 34 auf Meeresgrund verkapselt ausgeführt sein muss. Bei einer Energieversorgung von mehreren am Meeresgrund vorhandenen Motoren 4 müssen für jeden weiteren Motor 4 neben einem weiteren Kabel 14 auch noch zwei weitere Transformatoren 32, 34 vorgesehen werden.

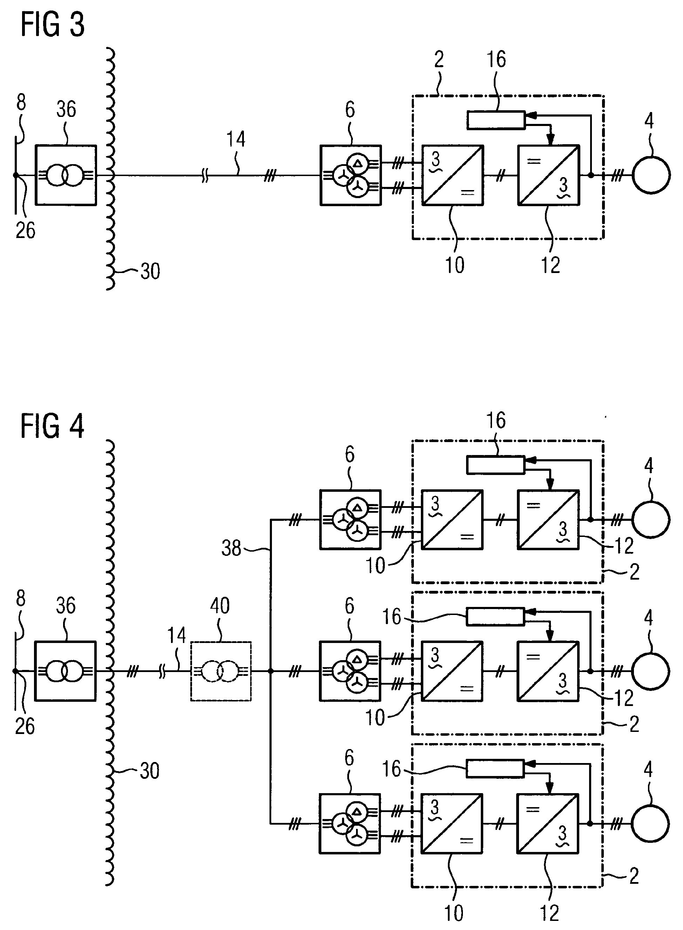

Bei einer weiteren Variante der Stromversorgungseinrichtung eines drehzahlveränderbaren Antriebs auf Meeresgrund ist der Spannungszwischenkreis-Umrichter 2 mit netzseitigem Stromrichtertransformator 6 gemäß Figur 3 auf dem Meeresgrund in unmittelbarer Nähe des elektrischen Motors 4 des drehzahlveränderbaren Antriebs angeordnet. An Land ist ein Netztransformator 36 vorgesehen, der primärseitig mit dem speisenden Versorgungsnetz 8, insbesondere mit dem Einspeisepunkt 26, und sekundärseitig mit dem Wechselstromkabel 14 elektrisch leitend verbunden ist. Durch die Verwendung des Netztransformators 36 kann die zu übertragende Wechselspannung auf einen Wert transformiert werden, der oberhalb des Potentials der Nennspannung des elektrischen Motors 4 liegt. Diese Übertragungsspannung wird vom Stromrichtertransformator 6 wieder heruntertransformiert.

Bei dieser Stromversorgungseinrichtung befindet sich nur noch der Transformator 36 an Land bzw. auf einer im Meer angeordneten Plattform. Der Spannungszwischenkreis-Umrichter 2 befindet sich nun am Motor 4 auf dem Meeresgrund, wobei dieser direkt am Motor 4 angebunden werden kann. Dadurch wird die Antriebs-Performance verbessert, wobei nun auch der Umrichter 2 verkapselt ausgeführt sein muss. Gegenüber der Variante der Stromversorgungseinrichtung gemäß Figur 2 hat sich am Abstand zwischen Einspeisepunkt 26 und Motor 4 nichts geändert.

In der Figur 4 ist eine Mehrmotoren-Variante der Stromversorgungseinrichtung gemäß Figur 4 schematisch dargestellt. Jeder Motor eines drehzahlveränderbaren Antriebs ist mit einem Spannungszwischenkreis-Umrichter 2 mit netzseitigem Stromrichtertransformator 6 verkoppelt. Am Meeresgrund ist das Wechselstromkabel 14 mit einer Wechselstrom-Sammelschiene 38 verknüpft, an der die mehreren stromrichtergespeisten Antriebe angeschlossen sind. Das Wechselstromkabel 14 kann lastseitig am Meeresgrund mit einem weiteren Transformator 40 versehen sein, der sekundärseitig mit der Wechselstrom-Sammelschiene 38 verknüpft ist. Da dieser weitere Transformator 40 nicht zwingend notwendig ist, ist dieser mittels unterbrochener Linien dargestellt. Mit diesem weiteren Transformator 40 weist die Wechselspannungs-Sammelschiene 38 ein Potential unterhalb des Potentials der Übertragungsspannung, aber oberhalb des Potentials der Nennspannung des elektrischen Motors 4 eines drehzahlveränderbaren Antriebs auf. Auch bei dieser Variante ist die Entfernung zwischen Einspeisepunkt 26 an Land und Antrieb am Meeresgrund wie bei den anderen Varianten gemäß Figuren 1 bis 3 immer noch beschränkt. Außerdem hat sich die Anzahl von Anlagenteilen auf dem Meeresgrund vervielfacht. Alle Anlagenteile, die am Meeresgrund angeordnet sind, müssen gekapselt, insbesondere jeweils in einem Druckbehälter untergebracht sein.

Aus der Veröffentlichung "Valhall Re-Development Project, Power from Shore" von Sverre Gilje und Lars Carlsson, abgedruckt in "ENERGEX 2006", sowie aus Dokument EP 1 385 259 A ist eine Stromversorgungseinrichtung bekannt, die eine Plattform auf dem Meer mit einem Einspeisepunkt an Land verbindet. Als Stromversorgungseinrichtung ist die bekannte Hochspannungs-Gleichstrom-Übertragungsanlage in der Version "Light" vorgesehen. Diese HVDC-Light weist zwei selbstgeführte Pulsstromrichter auf, die gleichspannungsseitig mittels eines Gleichstromkabels miteinander verbunden sind. Jeder dieser beiden selbstgeführten Pulsstromrichter weist wechselspannungsseitig ein Wechselstromfilter und gleichspannungsseitig einen Kondensator und ein Gleichstromfilter auf. Der eine selbstgeführte Pulsstromrichter ist mittels eines Netztransformators an einem Einspeisepunkt eines speisenden Netzes an Land angeordnet, wogegen der zweite selbstgeführte Pulsstromrichter auf einer Plattform auf dem Meer angeordnet ist. Als Gleichspannungskabel ist ein Seekabel vorgesehen, das eine Länge von ungefähr 300km aufweist. Zwischen diesen beiden Stromrichtern ist keine Kommunikation notwendig. Allein der Wert der Gleichspannung an beiden Enden des Gleichspannungskabels wird benötigt. Die Stromrichterstation an Land regelt die Übertragungsspannung und die Stromrichterstation auf der Plattform auf dem Meer regelt die Wirkleistung. Auch bei dieser Stromversorgungseinrichtung ist die Entfernung zwischen Einspeisepunkt und Plattform ebenfalls beschränkt.

Der Erfindung liegt nun die Aufgabe zugrunde, die bekannte Stromversorgungseinrichtung derart weiterzubilden, dass der Abstand zwischen Einspeisepunkt an Land und Antrieb am Meeresgrund wesentlich größer wird.

Diese Aufgabe wird mit den kennzeichnenden Merkmalen des Anspruchs 1 erfindungsgemäß gelöst.

Dadurch, dass als lastseitiger selbstgeführter Stromrichter der Stromversorgungseinrichtung ein Stromrichter mit verteilten Energiespeichern vorgesehen ist, dessen oberer und unterer Ventilzweig eines jeden Phasenmoduls wenigstens zwei elektrisch in Reihe geschaltete zweipolige Subsysteme aufweist, weist die Stromversorgungseinrichtung nach der Erfindung keine Energiespeicher im Gleichspannungszwischenkreis mehr auf, so dass nun das den netzseitigen Stromrichter und den lastseitigen Stromrichter der erfindungsgemäßen Stromversorgungseinrichtung elektrisch leitend verbindende Gleichstromkabel wesentlich größere Distanzen überbrücken kann. Dadurch kann der Stromrichter mit verteilten Energiespeichern der erfindungsgemäßen Stromversorgungseinrichtung am zu speisenden Motor am Meeresgrund und sein netzseitiger Stromrichter an Land angeordnet werden.

Durch den nicht notwendigerweise niederinduktiven Aufbau des Zwischenkreises und durch den fehlenden Zwischenkreiskondensator wird ein Zwischenkreiskurzschluss im Vergleich zu einem Spannungszwischenkreis-Umrichter mit einem Zwischenkreiskondensator sehr unwahrscheinlich. Dadurch müssen die Stromrichterventile des netzseitigen Stromrichters der erfindungsgemäβen Stromversorgungseinrichtung nicht mehr für einen durch einen niederohmigen Zwischenkreis-Kurzschluss hervorgerufenen Kurzschlussstrom ausgelegt werden. Außerdem kann die i²t-Anordnung dieser Stromrichterventile deutlich reduziert werden.

Durch die Verwendung eines Stromrichters mit einer Vielzahl von zweipoligen Subsystemen als lastseitigen Stromrichter der Stromversorgungseinrichtung kann der Spannungszwischenkreis-Umrichter zwischen Land und Meeresgrund aufgeteilt werden. Somit befindet sich nur noch der lastseitige Stromrichter mit verteilten Energiespeichern dieser Stromversorgungseinrichtung auf dem Meeresgrund. Da in Abhängigkeit der Anzahl der zweipoligen Subsysteme je Ventilzweig eines Phasenmoduls des lastseitigen Stromrichters mit verteilten Energiespeichern der Wert der Umrichter-Ausgangsspannung und damit der Motorspannung bestimmt wird, wird kein Transformator mehr am Meeresgrund benötigt.

Außerdem können durch die feingestufte Ausgangsspannungsform des lastseitigen Stromrichters mit verteilten Energiespeichern der erfindungsgemäßen Stromversorgungseinrichtung unter Wasser taugliche Motoren mit verminderten Anforderungen an die Wicklungsisolation verwendet werden. Da unabhängig von der Verwendung eines Transformators trotzdem eine hohe Motorspannung eingestellt werden kann, können Verbindungsleitungen und Durchführungen zum Motor für kleinere Ströme ausgelegt werden. Außerdem können dadurch bei höheren Leistungen Motoren mit mehreren Wicklungssystemen vermieden werden.

Da der lastseitige Stromrichter mit verteilten Energiespeichern der Stromversorgungseinrichtung pro Ventilzweig nur aus einer Anzahl elektrisch in Reihe geschalteter zweipoliger Subsysteme besteht, kann durch Hinzufügen von redundanten zweipoligen Subsysteme die Verfügbarkeit der Stromversorgungseinrichtung wesentlich erhöht werden.

Neben dem netzseitigen Stromrichter der erfindungsgemäßen Stromversorgungseinrichtung wird auch eine Signalelektronik des lastseitigen auf Meeresgrund angeordneten Stromrichters mit verteilten Energiespeichern an Land angeordnet. Diese Signalelektronik ist mittels eines Datenkabels signaltechnisch mit Steuereingängen des lastseitigen Stromrichters mit verteilten Energiespeichern am Meeresgrund verbunden. Somit sind wesentliche Bauteile der erfindungsgemäßen Stromversorgungseinrichtung an Land bzw. auf einer Plattform untergebracht, so dass sich der Aufwand für die Kapselung der Bauteile der erfindungsgemäßen Stromversorgungseinrichtung wesentlich verringert.

Bei einer vorteilhaften Ausführungsform der Stromversorgungseinrichtung nach der Erfindung ist der netzseitige ungesteuerte Stromrichter mittels des Gleichstromkabels mit einer auf Meeresgrund angeordneten Gleichspannungs-Sammelschiene elektrisch leitend verbunden. An dieser Gleichspannungs-Sammelschiene können eine Vielzahl von lastseitigen Stromrichtern mit verteilten Energiespeichern jeweils mit einem ausgangsseitigen Motor eines drehzahlveränderbaren Antriebs angeschlossen werden. Dadurch kann eine Stromversorgungseinrichtung nach der Erfindung kostengünstig für einen Mehrmotorenantrieb erstellt werden.

Weitere vorteilhafte Ausführungsformen der erfindungsgemäßen Stromversorgungseinrichtung sind den Ansprüchen 3 bis 11 entnehmbar.

Zur weiteren Erläuterung der Erfindung wird auf die Zeichnung Bezug genommen, in der mehrere Ausführungsformen einer erfindungsgemäßen Stromversorgungseinrichtung schematisch veranschaulicht sind.
- FIG 1-4: zeigen bekannte Varianten einer Stromversorgungseinrichtung für drehzahlveränderbare Antriebe für Subsea-Anwendungen, die
- FIG 5: zeigt eine erste Variante einer Stromversorgungseinrichtung nach der Erfindung, die
- FIG 6: zeigt ein Blockschaltbild einer vorteilhaften Ausführungsform einer Stromversorgungseinrichtung nach der Erfindung, in den
- FIG 7, 8: sind Ausführungsformen jeweils eines zweipoligen Subsystems des lastseitigen Stromrichters der Stromversorgungseinrichtung nach Figur 6, und in der
- FIG 9: ist eine zweite Variante einer Stromversorgungseinrichtung nach der Erfindung schematisch dargestellt.

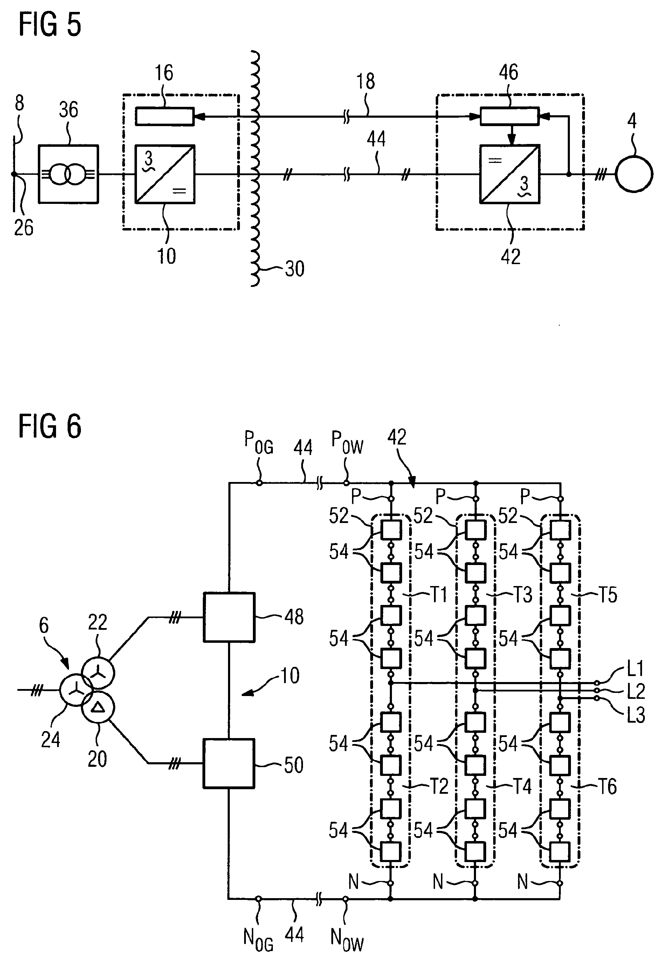

In der Figur 5 ist eine erste Variante der Stromversorgungseinrichtung nach der Erfindung schematisch dargestellt. In dieser Figur sind mit 42 ein lastseitiger Stromrichter mit verteilten Energiespeichern, mit 44 ein Gleichstromkabel und mit 46 eine Steuereinheit bezeichnet. Der netzseitige und der lastseitige Stromrichter 10 und 42 sind mittels des Gleichstromkabels 44 gleichspannungsseitig miteinander verknüpft. Die Steuereinheit 46 dieses lastseitigen Stromrichters 42 mit verteilten Energiespeichern ist mittels eines Datenkabels 18 mit der Signalelektronik 16 der Stromversorgungseinrichtung verbunden, die dem netzseitigen Stromrichter 10 zugeordnet ist. Der netzseitige Stromrichter 10, der als ungesteuerter Stromrichter ausgebildet ist, ist wechselspannungsseitig mittels des Netztransformators 36 mit dem Einspeisepunkt 26 des speisenden Versorgungsnetzes 8 verknüpft. Bei der Stromversorgungseinrichtung nach der Erfindung ist nur der lastseitige Stromrichter 42 mit verteilten Energiespeichern am Meeresgrund angeordnet. Alle anderen Anlagenteile dieser Stromversorgungseinrichtung sind an Land angeordnet. Der Übergang von Land zum Meer ist in dieser Figur ebenfalls durch eine Wellenlinie 30 gekennzeichnet. Als netzseitiger Stromrichter 10 ist eine Diodeneinspeisung vorgesehen, die im einfachsten Fall 6-pulsig ausgeführt ist. Sollen Stromoberschwingungen im Netz möglichst nicht vorhanden sein und wenn, dann nur mit einer kleinen Amplitude, so muss die Diodeneinspeisung 10 beispielsweise 12-, 18- oder 24-pulsig ausgeführt sein.

In der Figur 6 ist ein Blockschaltbild einer vorteilhaften Ausführungsform der Stromversorgungseinrichtung nach der Erfindung schematisch veranschaulicht. Gemäß diesem Blockschaltbild weist die Diodeneinspeisung 10 zwei 6-pulsige Diodenbrücken 48 und 50 auf, die wechselspannungsseitig jeweils mit einer Sekundärwicklung 22 und 20 des Stromrichtertransformators 6 und gleichspannungsseitig elektrisch in Reihe geschaltet sind. Der lastseitige Stromrichter 42 mit verteilten Energiespeichern weist mehrere Phasenmodule 52 auf, die gleichspannungsseitig elektrisch parallel geschaltet sind. Für die Parallelschaltung dieser Phasenmodule 52 sind eine positive und negative Gleichspannungs-Sammelschiene P_{0W} und N_{0W} vorgesehen. Zwischen diesen beiden Gleichspannungs-Sammelschienen P_{0W} und N_{0W} fällt eine nicht näher bezeichnete Gleichspannung ab. Jedes Phasenmodul 52 weist einen oberen und einen unteren Ventilzweig T1, T2 bzw. T3, T4 bzw. T5, T6 auf. Jeder Ventilzweig T1, ..., T6 weist wenigstens zwei zweipolige Subsysteme 54 auf.

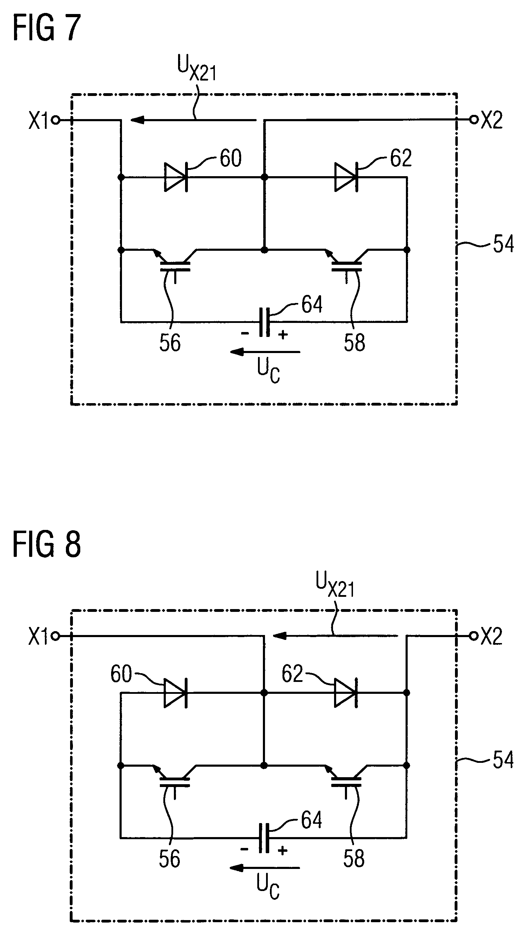

In der dargestellten Ausführungsform weist jeder Ventilzweig vier zweipolige Subsysteme 54 auf. Die zweipoligen Subsysteme 54 sind elektrisch in Reihe geschaltet. Ausführungsbeispiele dieser zweipoligen Subsysteme 54 sind in den Figuren 7 und 8 dargestellt. Jeder Verbindungspunkt zweier Ventilzweige T1, T2 bzw. T3, T4 bzw. T5, T6 bilden einen wechselspannungsseitigen Anschluss L1 bzw. L2 bzw. L3. An diesen wechselspannungsseitigen Anschlüssen L1, L2 und L3 ist der in der Figur 5 gezeigte elektrische Motor 4 angeschlossen. Die Gleichspannungs-Sammelschienen P_{0W} und N_{0W} des lastseitigen Stromrichters 42 mit verteilten Energiespeichern und die Gleichspannungs-Sammelschienen P_{0G} und N_{0G} des netzseitigen Stromrichters sind mittels des Gleichstromkabels 44 elektrisch leitend miteinander verbunden.

In der Figur 7 ist eine erste Ausführungsform eines zweipoligen Subsystems 54 dargestellt. Dieses zweipolige Subsystem 54 weist zwei abschaltbare Halbleiterschalter 56 und 58, zwei Dioden 60 und 62 und einen unipolaren Speicherkondensator 64 auf. Die beiden abschaltbaren Halbleiterschalter 56 und 58 sind elektrisch in Reihe geschaltet, wobei diese Reihenschaltung elektrisch parallel zum Speicherkondensator 64 geschaltet ist. Jedem abschaltbaren Halbleiterschalter 56 und 58 ist eine der beiden Dioden 60 und 62 derart elektrisch parallel geschaltet, dass diese zum korrespondierenden abschaltbaren Halbleiterschalter 56 und 58 antiparallel geschaltet ist. Der unipolare Speicherkondensator 64 des zweipoligen Subsystems 54 besteht entweder aus einem Kondensator oder einer Kondensatorbatterie aus mehreren solchen Kondensatoren mit einer resultierenden Kapazität C₀. Der Verbindungspunkt von Emitter des abschaltbaren Halbleiterschalters 56 und Anode der Diode 60 bilden eine Anschlussklemme X1 des Subsystems 54. Der Verbindungspunkt der beiden abschaltbaren Halbleiterschalter 56 und 58 und der beiden Dioden 60 und 62 bilden eine zweite Anschlussklemme X2 des zweipoligen Subsystems 54.

In der Ausführungsform des Subsystems 54 gemäß Figur 8 bildet dieser Verbindungspunkt die erste Anschlussklemme X1. Der Verbindungspunkt von Drain des abschaltbaren Halbleiterschalters 58 und Kathode der Diode 62 bildet die zweite Anschlussklemme X2 des zweipoligen Subsystems 54.

Gemäß der eingangs genannten Veröffentlichung mit dem Titel "Modulares Stromrichterkonzept für Netzkupplungsanwendung bei hohen Spannungen" kann das zweipolige Subsystem 54 drei Schaltzustände einnehmen. Im Schaltzustand I ist der abschaltbare Halbleiterschalter 56 eingeschaltet und der abschaltbare Halbleiterschalter 58 ausgeschaltet. In diesem Schaltzustand I ist die Klemmenspannung U_{X21} des zweipoligen Subsystems 54 gleich Null. Im Schaltzustand II sind der abschaltbare Halbleiterschalter 56 ausgeschaltet und der abschaltbare Halbleiterschalter 58 eingeschaltet. In diesem Schaltzustand II ist die Klemmenspannung U_{X21} des zweipoligen Subsystems 54 gleich der Spannung U_{C} am Speicherkondensator 64. Im normalen, störungsfreien Betrieb werden nur diese beiden Schaltzustände I und II genutzt. Im Schaltzustand III sind beide abschaltbare Halbleiterschalter 56 und 58 ausgeschaltet.

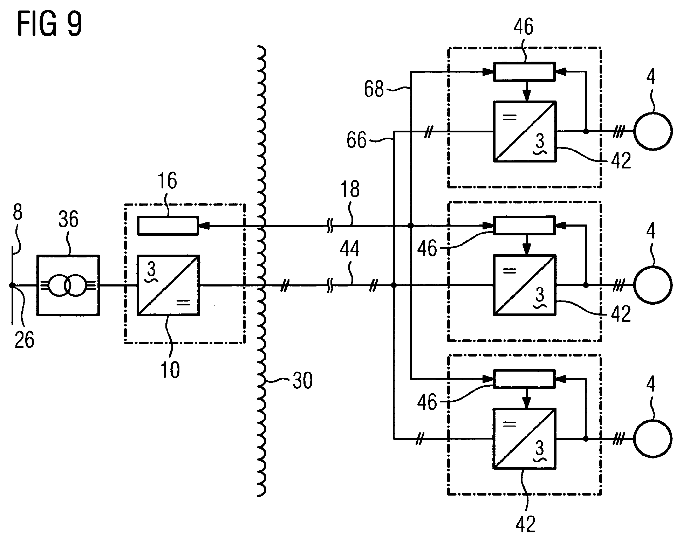

In der Figur 9 ist eine zweite Variante der Stromversorgungseinrichtung nach der Erfindung schematisch veranschaulicht. Gegenüber der Variante gemäß Figur 5 unterscheidet sich diese zweite Variante dadurch, dass eine Gleichspannungs-Sammelschiene 66 vorgesehen ist. An dieser Gleichspannungs-Sammelschiene 66 sind drei lastseitige Stromrichter 42 mit verteilten Energiespeichern jeweils mit einem lastseitigen Motor 4 eines drehzahlveränderbaren Antriebs angeschlossen. Diese Gleichspannungs-Sammelschiene 66 ist mittels des Gleichstromkabels 44 mit Gleichspannungs-Anschlüssen des netzseitigen Stromrichters 10 verknüpft. Außerdem ist eine Daten-Sammelschiene 68 vorgesehen, an der einerseits die Steuereinheiten 46 der lastseitigen Stromrichter 42 mit verteilten Energiespeichern und andererseits das Datenkabel 18 angeschlossen sind. Dadurch ist die an Land untergebrachte Signalelektronik 16 der Stromversorgungseinrichtung nach der Erfindung jeweils mit einer Steuereinheit 46 eines jeweiligen am Meeresgrund angeordneten lastseitigen Stromrichter 42 mit verteilten Energiespeichern signaltechnisch verbunden. Durch die Verwendung einer Gleichspannungs-Sammelschiene 66 verringern sich die Kabelkosten für einen Mehrmotoren-Antrieb und der Aufwand für die Montage.

Mit dieser erfindungsgemäßen Stromversorgungseinrichtung können drehzahlveränderbare Antriebe von Subsea-Anwendungen, beispielsweise Öl- und Gasförderanlagen, mit Energie aus einem speisenden Versorgungsnetz versorgt werden, wobei der Abstand zwischen der Einspeisung an Land und dem Antrieb am Meeresgrund mehrere hundert Kilometer bei Meerestiefen von mehreren Kilometern betragen kann.

## Patentansprüche

1. Stromversorgungseinrichtung eines auf Meeresgrund angeordneten drehzahlveränderbaren Antriebs, wobei diese Stromversorgungseinrichtung netz- und lastseitig einen Stromrichter (10, 12) aufweist, die gleichspannungsseitig mittels eines Gleichstromkabels (44) miteinander elektrisch leitend verbunden sind, deren netzseitiger Stromrichter (10) an Land mit einem speisenden Versorgungsnetz (8) verbunden ist, **dadurch gekennzeichnet, dass** netzseitig ein ungesteuerter Stromrichter (10) und lastseitig ein Stromrichter (42) mit verteilten Energiespeichern vorgesehen sind, dass jedes Phasenmodul (52) des Stromrichters (42) mit verteilten Energiespeichern einen oberen und einen unteren wenigstens zwei in Reihe geschaltete zweipolige Subsysteme (54) aufweisenden Ventilzweig (T1, T3, T5; T2, T4, T6) aufweist, dass der Stromrichter (42) mit verteilten Energiespeichern am Meeresgrund in unmittelbarer Nähe des drehzahlveränderbaren Antriebs angeordnet ist, und dass eine Signalelektronik (16) des Stromrichters (42) mit verteilten Energiespeichern an Land angeordnet ist.

2. Stromversorgungseinrichtung nach Anspruch 1, **dadurch gekennzeichnet, dass** der netzseitige ungesteuerte Stromrichter (10) mittels des Gleichstromkabels (44) mit einer am Meeresgrund angeordneten Gleichspannungs-Sammelschiene (66) elektrisch leitend verbunden ist, an der wenigstens ein lastseitiger selbstgeführter Stromrichter (42) mit wechselspannungsseitigem drehzahlveränderbaren Antrieb angeschlossen ist.

3. Stromversorgungseinrichtung nach Anspruch 1 oder 2, **dadurch gekennzeichnet, dass** der netzseitige ungesteuerte Stromrichter (10) auf einer auf dem Meer angeordneten Plattform angeordnet ist.

4. Stromversorgungseinrichtung nach einem der vorgenannten Ansprüche, **dadurch gekennzeichnet, dass** als netzseitiger ungesteuerter Stromrichter (10) ein Diodengleichrichter vorgesehen ist.

5. Stromversorgungseinrichtung nach Anspruch 4, **dadurch gekennzeichnet, dass** der Diodengleichrichter 12-pulsig ausgeführt ist.

6. Stromversorgungseinrichtung nach Anspruch 4, **dadurch gekennzeichnet, dass** der Diodengleichrichter 18-pulsig ausgeführt ist.

7. Stromversorgungseinrichtung nach Anspruch 4, **dadurch gekennzeichnet, dass** der Diodengleichrichter 24-pulsig ausgeführt ist.

8. Stromversorgungseinrichtung nach einem der vorgenannten Ansprüche, **dadurch gekennzeichnet, dass** ein zweipoliges Subsystem (54) zwei elektrisch in Reihe geschaltete abschaltbare Halbleiterschalter (56, 58) und einen Speicherkondensator (64) aufweist, wobei diese Reihenschaltung elektrisch parallel zum Speicherkondensator (64) geschaltet ist, wobei ein Verbindungspunkt der beiden abschaltbaren Halbleiterschalter (56, 58) eine erste Anschlussklemme (X2, X1) des zweipoligen Subsystems (54) bildet, wobei ein Pol des Speicherkondensators (64) eine zweite Anschlussklemme (X1, X2) dieses zweipoligen Subsystems (54) bildet.

9. Stromversorgungseinrichtung nach Anspruch 8, **dadurch gekennzeichnet, dass** als abschaltbarer Halbleiterschalter (56, 58) ein Insulated Gate Bipolar Transistor vorgesehen ist.

10. Stromversorgungseinrichtung nach einem der vorgenannten Ansprüche, **dadurch gekennzeichnet, dass** der drehzahlveränderbare Antrieb einen elektrischen Motor mit läuferseitiger Pumpe aufweist.

11. Stromversorgungseinrichtung nach einem der Ansprüche 1 bis 9, **dadurch gekennzeichnet, dass** der drehzahlveränderbare Antrieb einen elektrischen Motor mit läuferseitigem Kompressor aufweist.

## Claims

1. Power supply device for a variable rotation speed drive which is arranged on the seabed, wherein this power supply device has a power converter (10, 12) on the power supply system and load sides, which are electrically conductively connected to one another on the DC voltage side by means of a direct-current cable (44) and whose power converter (10) on the power supply system side is connected to a feeding power supply system (8) on land,
**characterized in that** an uncontrolled power converter (10) is provided on the power supply system side and a power converter (42) with distributed energy stores is provided on the load side, **in that** each phase module (52) of the power converter (42) with distributed energy stores has an upper and a lower valve branch (T1, T3, T5; T2, T4, T6), which has at least two series-connected, two-pole subsystems (54), **in that** the power converter (42) with distributed energy stores is arranged on the seabed in the immediate vicinity of the variable rotation speed drive, and **in that** signal electronics (16) of the power converter (42) with distributed energy stores are arranged on land.

2. Power supply device according to Claim 1,
**characterized in that** the uncontrolled power converter (10) on the power supply system side is electrically conductively connected by means of the direct-current cable (44) to a DC voltage busbar (66) which is arranged on the seabed, to which DC voltage busbar (66) at least one self-commutated power converter (42), on the load side, is connected, with a variable rotation speed drive on the AC voltage side.

3. Power supply device according to Claim 1 or 2,
**characterized in that** the uncontrolled power converter (10) on the power supply system side is arranged on a platform which is arranged at sea.

4. Power supply device according to one of the abovementioned claims,
**characterized in that** a diode rectifier is provided as the uncontrolled power converter (10) on the power supply system side.

5. Power supply device according to Claim 4,
**characterized in that** the diode rectifier is a 12-pulse rectifier.

6. Power supply device according to Claim 4,
**characterized in that** the diode rectifier is an 18-pulse rectifier.

7. Power supply device according to Claim 4,
**characterized in that** the diode rectifier is a 24-pulse rectifier.

8. Power supply device according to one of the abovementioned claims,
**characterized in that** a two-pole subsystem (54) has an energy storage capacitor (64) and two semiconductor switches (56, 58), which can be turned off and are electrically connected in series, wherein this series circuit is connected electrically in parallel with the energy storage capacitor (64), wherein a junction point between the two semiconductor switches (56, 58) which can be turned off forms a first connecting terminal (X2, X1) of the two-pole subsystem (54), and wherein one pole of the energy storage capacitor (64) forms a second connecting terminal (X1, X2) of this two-pole subsystem (54).

9. Power supply device according to Claim 8,
**characterized in that** an insulated gate bipolar transistor is provided as the semiconductor switch (56, 58) which can be turned off.

10. Power supply device according to one of the abovementioned claims,
**characterized in that** the variable rotation speed drive has an electric motor with a pump on the rotor side.

11. Power supply device according to one of Claims 1 to 9,
**characterized in that** the variable rotation speed drive has an electric motor with a compressor on the rotor side.

## Revendications

1. Dispositif d'alimentation en courant d'un entraînement disposé au fond de la mer et à vitesse de rotation variable, dans lequel ce dispositif d'alimentation en courant a un convertisseur (10) de courant du côté du réseau et un convertisseur (12) du côté de la charge, qui sont reliés entre eux d'une manière conductrice de l'électricité du côté de la tension continue au moyen d'un câble (44) de tension continue, dont le convertisseur (10) du côté du réseau est relié à terre à un réseau (8) d'alimentation,
**caractérisé en ce qu'**il est prévu, du côté du réseau, un convertisseur (10) non commandé et, du côté de la charge, un convertisseur (42) à accumulateurs d'énergie répartis, **en ce que** chaque module (52) de phase du convertisseur (42) à accumulateurs d'énergie répartis a une branche (T1, T3, T5; T2, T4, T6) de soupape supérieure et inférieure ayant au moins deux sous-systèmes (54) bipolaires montés en série, **en ce que** le convertisseur (42) à accumulateurs d'énergie répartis est disposé au fond de la mer à proximité immédiate de l'entraînement à vitesse de rotation variable et **en ce qu'**une électronique (16) de signalisation du convertisseur (42) à accumulateurs d'énergie répartis est à terre.

2. Dispositif d'alimentation en courant suivant la revendication 1,
**caractérisé en ce que** le convertisseur (10) non commandé du côté du réseau est relié d'une manière conductrice de l'électricité au moyen du câble (44) de courant continu à une barre (66) collectrice de tension continue disposée au fond de la mer, barre à laquelle est connecté au moins un convertisseur (42) du côté de la charge à commutation automatique à entraînement à vitesse de rotation variable du côté de la tension alternative.

3. Dispositif d'alimentation en courant suivant la revendication 1 ou 2,
**caractérisé en ce que** le convertisseur (10) non commandé du côté du réseau est disposé sur une plateforme en mer.

4. Dispositif d'alimentation en courant suivant l'une des revendications précédentes,
**caractérisé en ce qu'**il est prévu un redresseur à diode comme convertisseur (10) non commandé du côté du réseau.

5. Dispositif d'alimentation en courant suivant la revendication 4,
**caractérisé en ce que** le redresseur à diode est réalisé à 12 impulsions.

6. Dispositif d'alimentation en courant suivant la revendication 4,
**caractérisé en ce que** le redresseur à diode est réalisé à 18 impulsions.

7. Dispositif d'alimentation en courant suivant la revendication 4,
**caractérisé en ce que** le redresseur à diode est réalisé à 24 impulsions.

8. Dispositif d'alimentation en courant suivant l'une des revendications précédentes,
**caractérisé en ce qu'**un sous-système (54) bipolaire a deux commutateurs (56, 58) à semiconducteurs montés en série et pouvant être ouverts et un condensateur (64) d'accumulation, ce circuit série étant monté électriquement en parallèle au condensateur (64) d'accumulation, dans lequel un point de liaison des deux commutateurs (56, 58) à semiconducteurs pouvant être ouverts forme une première borne (X2, X1) de connexion du sous-système (54) bipolaire, un pôle du condensateur (64) d'accumulation formant une deuxième borne (X1, X2) de connexion de ce sous-système bipolaire.

9. Dispositif d'alimentation en courant suivant la revendication 8,
**caractérisé en ce qu'**il est prévu, comme commutateur (56, 58) à semiconducteurs pouvant être ouvert, un insulated gate bipolar transistor.

10. Dispositif d'alimentation en courant suivant l'une des revendications précédentes,
**caractérisé en ce que** l'entraînement à vitesse de rotation variable a un moteur électrique ayant une pompe du côté de l'induit.

11. Dispositif d'alimentation en courant suivant l'une des revendications 1 à 9,
**caractérisé en ce que** l'entraînement à vitesse de rotation variable a un moteur électrique ayant un compresseur du côté de l'induits.
